(19) Europäisches Patentamt
European Patent Office
Office européen des brevets

(11) **EP 4 543 108 A1**

(12) **EUROPEAN PATENT APPLICATION**
published in accordance with Art. 153(4) EPC

(43) Date of publication:
**23.04.2025   Bulletin 2025/17**

(21) Application number: 23839915.8

(22) Date of filing: **11.07.2023**

(51) International Patent Classification (IPC):
*H04W 64/00* (2009.01)   *H04W 72/23* (2023.01)
*H04W 56/00* (2009.01)   *H04W 84/06* (2009.01)

(52) Cooperative Patent Classification (CPC):
H04W 56/00; H04W 64/00; H04W 72/04;
H04W 72/23; H04W 84/06

(86) International application number:
**PCT/KR2023/009817**

(87) International publication number:
**WO 2024/014823 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **11.07.2022   KR 20220085247**

(71) Applicant: Samsung Electronics Co., Ltd.
**Suwon-si, Gyeonggi-do 16677 (KR)**

(72) Inventors:
• KIM, Sangbum
  Suwon-si, Gyeonggi-do 16677 (KR)
• AGIWAL, Anil
  Suwon-si, Gyeonggi-do 16677 (KR)
• JUNG, Sangyeob
  Suwon-si, Gyeonggi-do 16677 (KR)
• HWANG, June
  Suwon-si, Gyeonggi-do 16677 (KR)

(74) Representative: Gulde & Partner
Patent- und Rechtsanwaltskanzlei mbB
Berliner Freiheit 2
10785 Berlin (DE)

(54) **METHOD AND DEVICE FOR DERIVING POSITION INFORMATION ABOUT NETWORK-BASED TERMINAL IN NON-TERRESTRIAL NETWORK SYSTEM**

(57)     The present disclosure relates to a 5G or 6G communication system for supporting higher data transmission rates. The method performed by a terminal in a non-terrestrial network (NTN) may comprise the steps of: receiving, from a satellite, information about a plurality of NTN cells; identifying a plurality of timing advance (TA) values of the plurality of NTN cells on the basis of the information about the plurality of NTN cells; and transmitting, to the satellite, a timing advance report MAC control element (TAR MAC CE) including the plurality of TA values of the plurality of NTN cells.

FIG.1F

EP 4 543 108 A1

**Description**

[Technical Field]

The disclosure relates to an operation of a terminal and a base station in a wireless communication system and, more specifically, to a method and a device for deriving position information of a network-based terminal in a non-terrestrial network system.

[Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mm Wave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing endto-end AI support functions, and next-generation distributed computing technology for implementing services at levels of complexity exceeding the limit of UE operation capability by utilizing ultra-high-performance communication and computing resources.

With the advance of wireless communication systems as described above, there is a need for ways to smoothly provide various services. With regard to this, in particular, there is a need for ways to smoothly operate MUSIM terminals.

[Disclosure of Invention]

[Technical Problem]

The disclosure is to provide a device and a method which can effectively derive position information of a terminal in a wireless communication system.

[Solution to Problem]

According to an embodiment, a method performed by a terminal in a non-terrestrial network (NTN) may include receiving information on a plurality of NTN cells from a satellite, identifying a plurality of timing advance (TA) values of the plurality of NTN cells, based on the information on the plurality of NTN cells, and transmitting, to the satellite, a timing advance report MAC control element (TAR MAC CE) including the plurality of TA values of the plurality of NTN cells.

According to an embodiment, a terminal in a non-terrestrial network (NTN) may include a transceiver, and a controller coupled with the transceiver. The controller may be configured to receive information on a plurality of NTN cells from a satellite, identify a plurality of timing advance (TA) values of the plurality of NTN cells, based on the information on the plurality of NTN cells, and transmit, to the satellite, a timing advance report control element (TAR MAC CE) including the plurality of TA values of the plurality of NTN cells.

According to an embodiment, a method performed by a satellite in a non-terrestrial network (NTN) may include transmitting information on a plurality of NTN cells to a terminal, and receiving, from the terminal, a timing advance report control element (TAR MAC CE) including a plurality of timing advance (TA) values of the plurality of NTN cells. The plurality of TA values of the plurality of NTN cells may be based on the information on the plurality of NTN cells.

According to an embodiment, a satellite in a non-terrestrial network (NTN) may include a transceiver, and a controller coupled with the transceiver. The controller may be configured to transmit information on a plurality of NTN cells to a terminal, and receive, from the terminal, a timing advance report control element (TAR MAC CE) including a plurality of timing advance (TA) values of the plurality of NTN cells. The plurality of TA values of the plurality of NTN cells may be based on the information on the plurality of NTN cells.

[Advantageous Effects of Invention]

The disclosure provides a device and a method which can effectively derive position information of a terminal in a wireless communication system.

[Brief Description of Drawings]

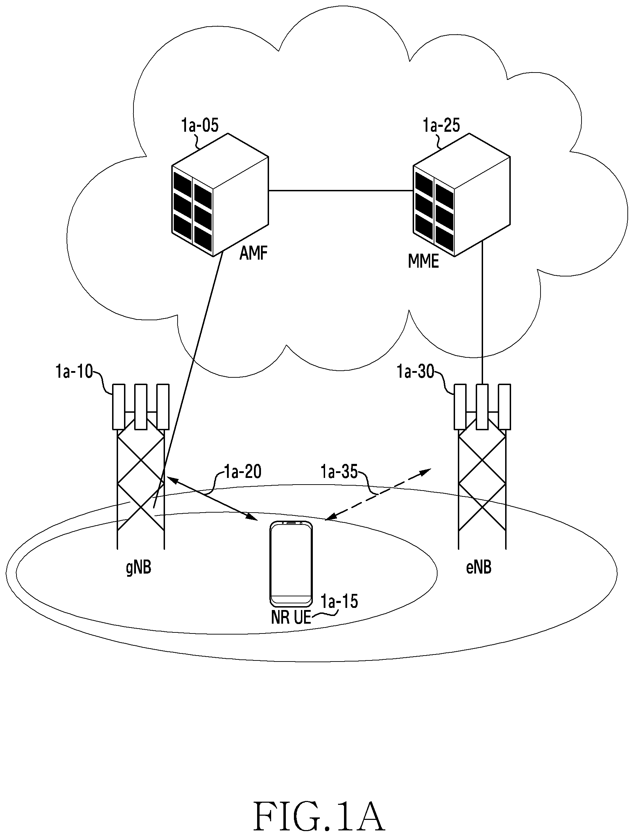

FIG. 1A illustrates a structure of a next-generation mobile communication system according to an embodiment of the disclosure.

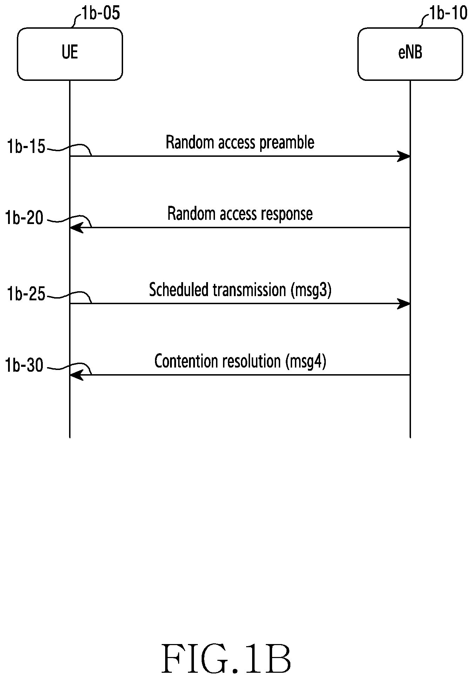

FIG. 1B is a diagram illustrating a random access process according to an embodiment of the disclosure.

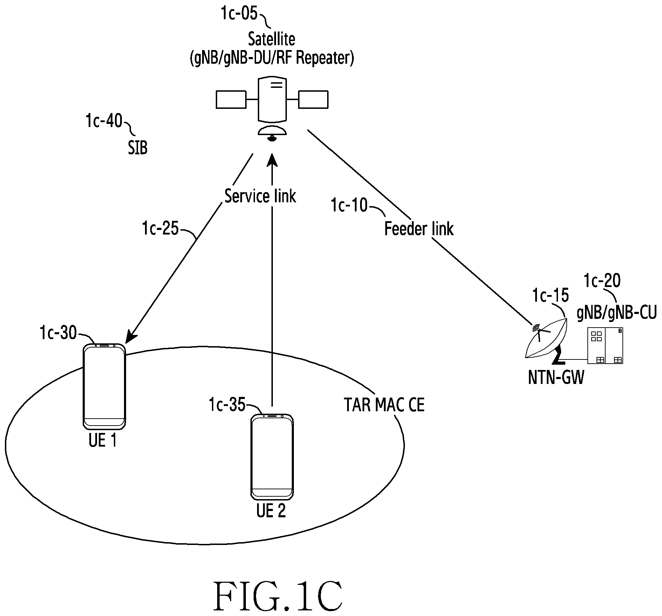

FIG. 1C is a diagram illustrating a non-terrestrial network (NTN) according to an embodiment of the disclosure.

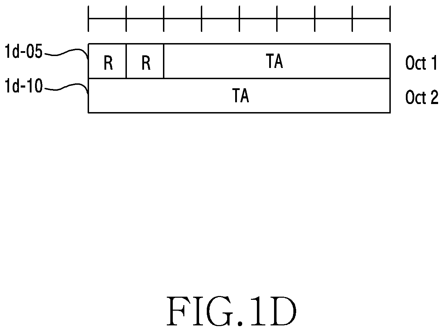

FIG. 1D is a diagram illustrating a format of a timing advance report MAC CE according to an embodiment of the disclosure.

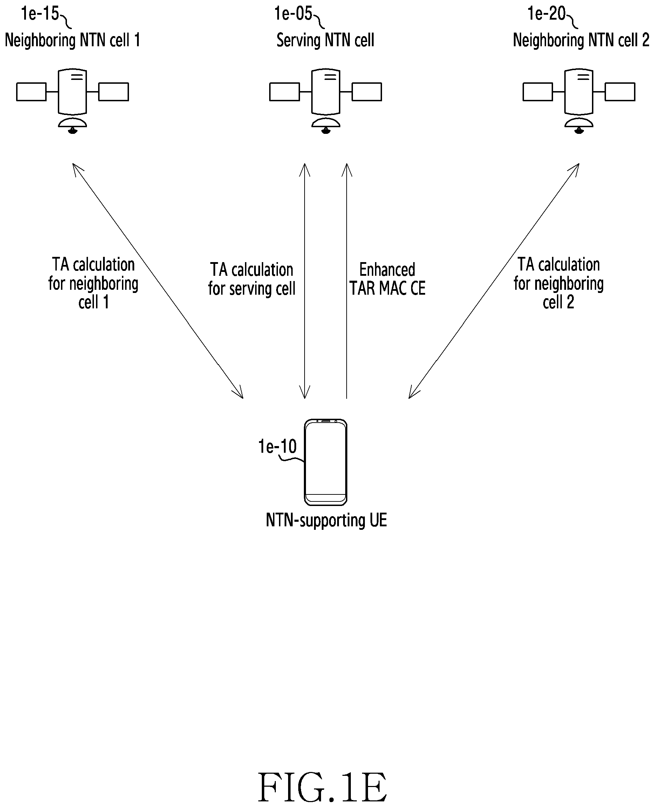

FIG. 1E is a diagram illustrating a method of deriving terminal position information by using a plurality of NTN cells according to an embodiment of the disclosure.

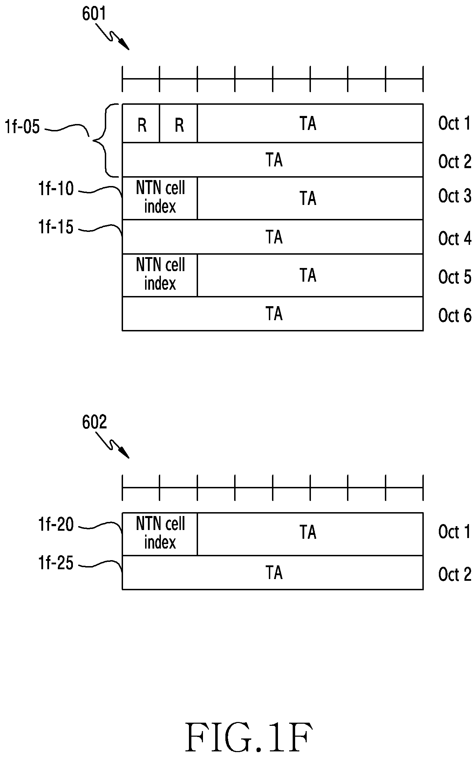

FIG. 1F is a diagram illustrating a format of a MAC CE including timing advance information on a plurality of NTN cells according to an embodiment of the disclosure.

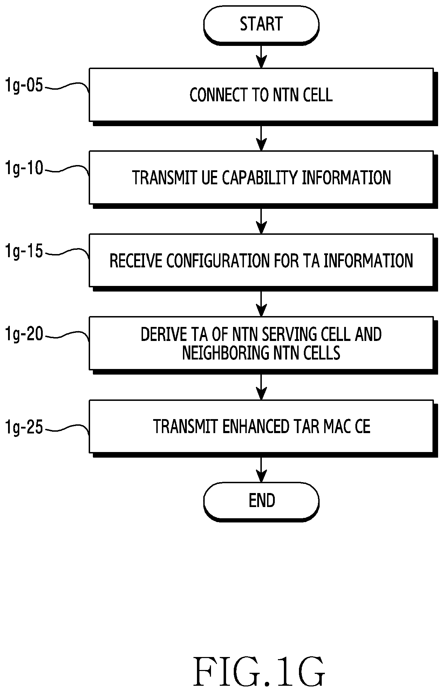

FIG. 1G is a flowchart of a terminal operation of deriving terminal position information by using a plurality of NTN cells according to an embodiment of the disclosure.

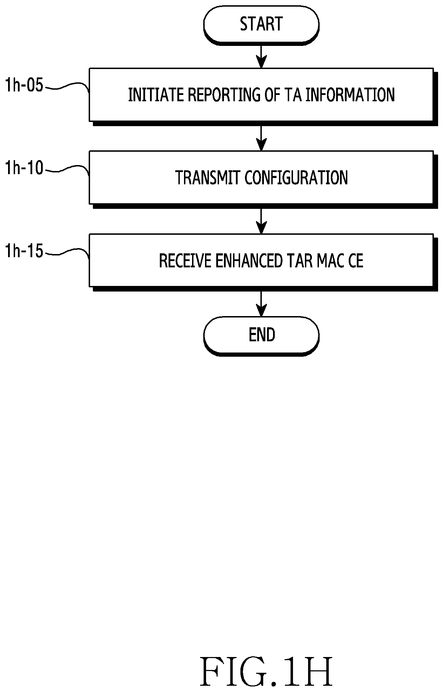

FIG. 1H is a flowchart of a base station operation of deriving terminal position information by using a plurality of NTN cells according to an embodiment of the disclosure.

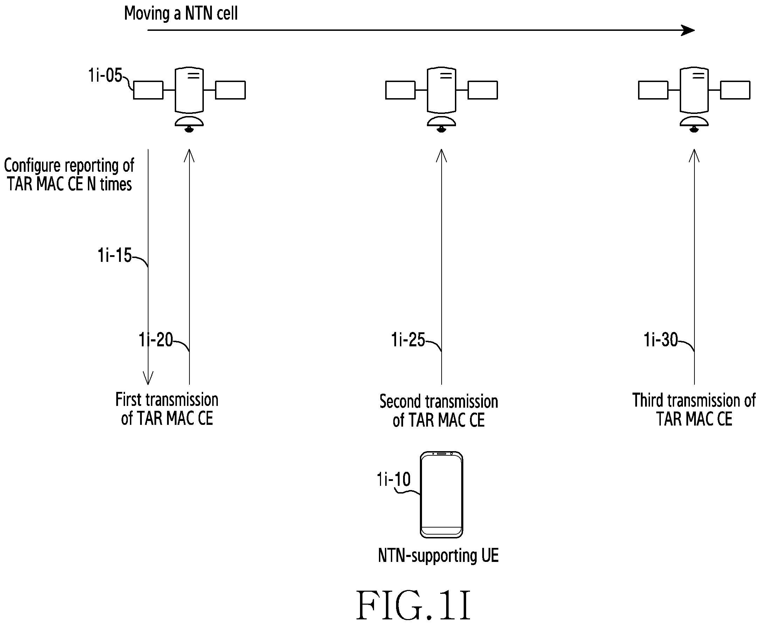

FIG. 1I is a diagram illustrating a method of deriving terminal position information by using a single NTN cell according to an embodiment of the disclosure.

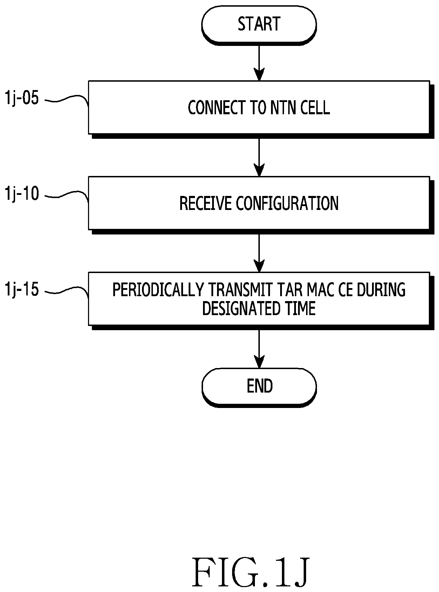

FIG. 1J is a flowchart of a terminal operation of deriving terminal position information by using a single NTN cell according to an embodiment of the disclosure.

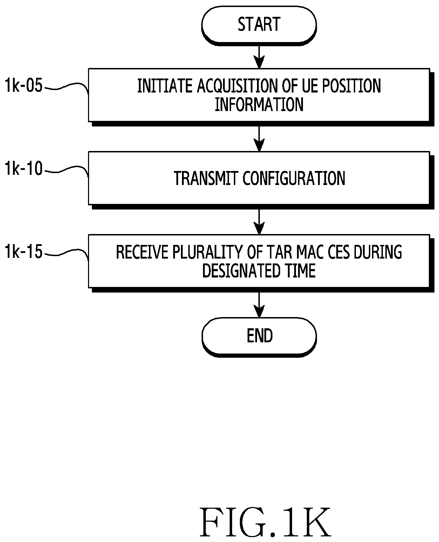

FIG. 1K is a flowchart of a base station operation of deriving terminal position information by using a single NTN cell according to an embodiment of the disclosure.

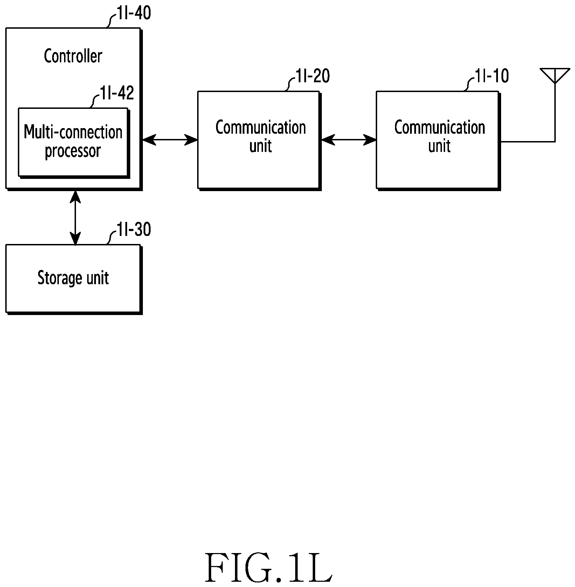

FIG. 1L is a block diagram illustrating an internal structure of a terminal according to an embodiment of the disclosure.

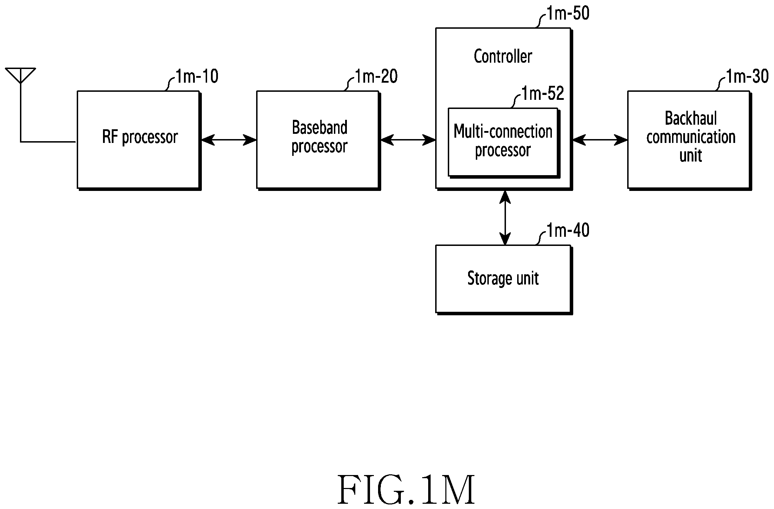

FIG. 1M is a block diagram illustrating a configuration of a base station according to an embodiment of the disclosure.

[Mode for the Invention]

In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification. Hereinafter, embodiments of the disclosure will be described with reference to the accompanying drawings. The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the disclosure, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". In the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be referred to as radio resource control (RRC) signaling or a media access control (MAC) control element (CE).

In the following description of the disclosure, terms and names defined in the 3rd generation partnership project new radio (3GPP NR) or 3GPP long term evolution (3GPP LTE) standards will be used for the sake of descriptive convenience. However, the disclosure is not limited by these terms and names, and may be applied in the same way to systems that conform other standards. In the disclosure, the term "g NB" may be interchangeably used with the term "e NB" for the sake of descriptive convenience. That is, a base station described as "eNB" may refer to "gNB". Furthermore, the term "terminal" may refer to not only a mobile phone, an MTC device, an NB-IoT device, and a sensor, but also other wireless communication devices.

In the following description, a base station is an entity that allocates resources to terminals, and may be at least one of a gNode B (gNB), an eNode B (eNB), a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, the examples above are not limiting.

The disclosure may be applied to 3GPP NR (5th generation wireless communication standard). In addition, the disclosure may be applied to intelligent services (e.g., smart homes, smart buildings, smart cities, smart cars or connected cars, healthcare, digital education, retail business, security and safety-related services, etc.) on the basis of 5G communication technology and IoT-related technology. In the disclosure, the term "eNB" may be interchangeably used with the term "gNB" for the sake of descriptive convenience. That is, a base station described as "eNB" may refer to "gNB". Furthermore, the term "terminal" may refer to not only a mobile phone, an MTC device, an NB-IoT device, and a sensor, but also other wireless communication devices.

JA wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultramobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink may refer to a radio link via which a user equipment (UE) or a mobile station (MS) transmits data or control signals to a base station (BS) or eNode B, and the downlink may refer to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultrareliability low-latency communication (URLLC), and the like.

According to some embodiments, eMBB may aim at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and may also requires a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The above three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, mMTC, URLLC, and eMBB as described above are merely an example of different types of services, and service types to which the disclosure is applied are not limited to those mentioned above.

In the following description of embodiments of the disclosure, LTE, LTE-A, LTE Pro, or 5G (or NR, next-generation mobile communication) systems will be described by way of example, but the embodiments of the disclosure may be applied to other communication systems having similar backgrounds or channel types. In addition, based on determinations by those skilled in the art, the embodiments of the disclosure may be applied to other communication systems through some modifications without significantly departing from the scope of the disclosure.

Although the disclosure will be described based on the long term evolution (LTE) system, the disclosure may also be applied to other mobile communication systems such as the new radio (NR) system which is a next-generation mobile communication system. For example, in the disclosure, an eNB in LTE corresponds to a gNB in NR, and an MME in LTE corresponds to an AMF in NR.

FIG. 1A illustrates a structure of a mobile communication system according to an embodiment of the disclosure.

Referring to FIG. 1A, a radio access network of a next-generation mobile communication system (e.g., new radio, NR) may include a next-generation base station (e.g., new radio node B, hereinafter gNB) 1a-10 and a new radio core network. The new radio core network may include an access management function (AMF) 1a-05. A structure of the radio access network is not limited to the above example. A user terminal (new radio user equipment, hereinafter NR UE or NR terminal) 1a-15 may access an external network via the gNB 1a-10 and the AMF 1a-05.

In FIG. 1A, according to an embodiment, the gNB may correspond to an evolved node B (eNB) of a conventional LTE system. The gNB may be connected to the NR UE through a radio channel and provide outstanding services as compared to a conventional node B (1a-20). In the mobile communication system, since all user traffic is serviced through a shared channel, a device that collects state information, such as buffer statuses, available transmit power states, and channel states of UEs, and performs scheduling accordingly s required, and the gNB 1a-10 may serve as the device. In general, one gNB may control multiple cells. In order to implement ultrahigh-speed data transfer beyond the current LTE, the mobile communication system may have a wider bandwidth than the existing maximum bandwidth, may employ an orthogonal frequency division multiplexing (hereinafter referred to as OFDM) as a radio access technology, and may additionally integrate a beamforming technology therewith.

According to an embodiment, the gNB 1a-10 may employ an adaptive modulation & coding (hereinafter referred to as AMC) scheme for determining a modulation scheme and a channel coding rate according to a channel state of a UE.

According to an embodiment, the AMF 1a-05n may perform functions such as mobility support, bearer configuration, and QoS configuration. The AMF 1a-05 is a device responsible for various control functions as well as a mobility management function for a UE, and may be connected to multiple base stations. In addition, the next-generation mobile communication system may interwork with the existing LTE system, and the AMF 1a-05 may be connected to an MME 1a-25 via a network interface. The MME 1a-25 may be connected to an eNB 1a-30 that is a conventional base station. A UE supporting LTE-NR dual connectivity may transmit/receive data while maintaining connections to both the gNB and the eNB (1a-35).

FIG. 1B is a diagram illustrating a random access process according to an embodiment of the disclosure.

Referring to FIG. 1B, a random access according to an embodiment may be performed when uplink synchronization is performed or when data is transmitted to a network. For example, the random access may be performed when an electronic device (e.g., a UE, a base station, or a server) switches from a standby mode to a connected mode, performs RRC re-establishment, performs handover, starts uplink data transmission, or starts downlink data transmission. A UE 1b-05 may, when a dedicated preamble is provided from a base station 1b-10, apply the provided preamble to transmit a preamble to the base station 1b-10. If the UE 1b-05 does not receive a preamble from the base station 1b-10, the UE 1b-05 may select one group from among two preamble groups, and select a preamble belonging to the selected preamble group. For example, the preamble groups may be referred to as group A and group B, respectively. The UE 1b-05 may, if a channel quality state is better than a particular threshold value and the size of msg 3 is greater than a particular threshold value, select a preamble belonging to group B and, otherwise, select a preamble belonging to group A.

According to an embodiment, if the UE 1b-05 has transmitted a preamble in the n-th subframe (random access preamble) (operation 1b-15), the base station 1b-10 may start a random access response (RAR) window from the (n+3)th subframe and monitor whether a RAR is transmitted within a window time duration (random access response) (operation 1b-20). For example, scheduling information of the RAR may be indicated by a RA-RNTI of a physical downlink control channel (PDCCH). For example, the random access-radio network temporary identifier (RA-RNTI) may be derived using the position of a wireless resource on the time and frequency axes having been used to transmit a preamble. The RAR may include a timing advance, an uplink (UL) grant, and/or a temporary C-RNTI. For example, timing advance information may be used to determine a timing when the UE transmits an uplink signal.

According to an embodiment, if an RAR is successfully received in an RAR window, the UE 1b-05 may use UL grant information included in the RAR to transmit msg3 (scheduled transmission) to the base station 1b-10 (scheduled transmission (msg3)) (operation 1b-25). The msg3 (scheduled transmission) may include different information according to the purpose of random access. Table 1 shows an example of information included in scheduled transmission (msg3).

According to an embodiment, msg3 (scheduled transmission) may include at least one of information elements (IEs) in [Table 1].

[Table 1]

| CASE | Message 3 Contents |
|---|---|
| RRC CONNECTION SETUP | CCCH SDU |
| RRC RE-ESTABLISHMENT | CCCH SDU, BSR (if grant is enough), PHR (if triggered & grant is enough) |
| Handover (random preamble) | C-RNTI CE, BSR, PHR, (part of) DCCH SDU |
| Handover (dedicate preamble) | BSR, PHR, (part of) DCCH SDU |
| UL resume | C-RNTI CE, BSR, PHR, (part of) DCCH/DTCH SDU |
| PDCCH order (random preamble) | C-RNTI CE, BSR, PHR, (part of) DCCH/DTCH SDU |
| PDCCH order (dedicate preamble) | BSR, PHR, (part of) DCCH/DTCH SDU |

The msg3 (scheduled transmission) may be transmitted in the (n+6)th subframe if the RAR is received in the n-th subframe. A hybrid automatic repeat and request (HARQ) may be applied starting from the msg3 (scheduled transmission). After the msg3 (scheduled transmission) is transmitted, the UE may drive a particular timer and, until the timer expires, monitor a contention resolution (CR) message (contention resolution (msg4)) (operation 1b-30). The CR message may include, as well as a CR MAC CE, an RRC connection setup and/or RRC connection reestablishment message according to a random access purpose.

According to an embodiment, the base station 1b-10 needs to receive signals transmitted from multiple UEs through time synchronization so as to separately decode the signals. Therefore, the base station may, in order to adjust synchronization of uplink signals, perform a random access process for each UE or provide timing advance command information to each UE by using a timing advance command MAC CE. A UE having received the timing advance command information may adjust a timing at which the UE is to transmit an uplink signal, by using the timing advance command information.

According to an embodiment, a timing advance time (T_TA) may be derived, calculated, or obtained through Equation 1.

$$[\text{Equation 1}]$$
$$T\_TA = (N\_TA + N\_TA,\text{offset}) \times T\_c$$

According to an embodiment, N_TA may be referred to as timing advance command information provided from a timing advance command MAC CE or an RAR/MSGB. N_TA,offset may be referred to as an offset value. T_c may be referred to as a sampling time. As an N_TA value, the value of 0 may be applied during an initial random access process.

FIG. 1C is a diagram illustrating a non-terrestrial network (NTN) according to an embodiment of the disclosure.

Referring to FIG. 1C, an NTN according to an embodiment may be referred to as a technology of using an unmanned aerial system (UAS) or a satellite located at a high altitude to provide a data service to UEs on the ground. A satellite 1c-05 may serve as an independent base station, and/or a base station DU or radio frequency (RF) repeater in a central unit (CU)-distributed unit (DU) base station structure. According to the role of the satellite 1c-05, a base station CU or a base station 1c-20 connected to an NTN-gateway (GW) 1c-15 may exist or be located on the ground. A wireless section between the satellite 1c-05 and the NTN-GW on the ground may be referred to as a feeder link 1c-10. Wireless sections between the satellite 1c-05 and UEs 1c-30 and 1c-35 on the ground may be referred to as service links 1c-25.

According to an embodiment, since the satellite 1c-05 is moving at a high altitude and a high speed, there may occur a very long propagation delay and a Doppler distortion phenomenon. Therefore, in order for smooth communication between the satellite 1c-05 and the UEs 1c-30 and 1c-35, distortion phenomena (e.g., a propagation delay and/or a Doppler distortion phenomenon) need to be compensated for in advance. In order to compensate for a distortion phenomenon, predetermined information may be required. The satellite 1c-05 may provide system information to the UEs on the ground. For example, the satellite 1c-05 may provide system information to the UEs on the ground through SIB19 1c-40. For example, an SIB may be satellite assistance information.

According to an embodiment, a system information block (SIB) (e.g., SIB19) may include position information and speed information on the satellite 1c-05 and a satellite adjacent to the satellite 1c-05, and/or various information required for compensating for a propagation delay and/or a Doppler distortion phenomenon. The UEs may compensate for a distortion phenomenon by using, together with position information of the UEs, information (e.g., position information on the satellite and a satellite adjacent to the satellite, the speeds thereof, and/or various information required for compensating for a propagation delay and/or a Doppler distortion phenomenon).

According to an embodiment, there may occur a very long propagation delay in communication with the NTN. Therefore, a time synchronization method as in [Equation 1] may be not enough to compensate for a propagation delay. For example, a delay time in the feeder link 1c-10 and a delay time in a service link caused by the long distance between the satellite and a UE may not be adjustable through a conventional time synchronization method. Therefore, in the communication with the NTN, a timing advance time (T_TA) may be obtained through Equation 2.

$$T\_TA = (N\_TA + N\_TA,common + N\_TA,UE\text{-}specific + N\_TA,offset) \times T\_c \qquad \text{[Equation 2]}$$

According to an embodiment, N_TA,common may be a value for compensating for a delay time in the feeder link 1c-10. Predetermined information for calculating N_TA,common may be provided from an SIB (e.g., SIB19). A UE may derive an N_TA,common value through the predetermined information for calculating N_TA,common and Equation 2.

According to an embodiment, N_TA,UE-specific may be a value for compensating for a delay time in the service link. Position information of a satellite may be provided to a UE (e.g., UE1 or UE2) through an SIB (e.g., SIB19). The UE may calculate the distance between the UE and the satellite by using position information of the UE together, and derive or obtain an N_TA,UE-specific value, based on the calculated distance.

According to an embodiment, a T_TA value may be used for a NTN cell to schedule a UE. Therefore, the UE may report a timing advance report MAC CE (TAR MAC CE) including a T_TA value to the NTN cell.

FIG. 1D is a diagram illustrating a format of a timing advance report MAC CE according to an embodiment of the disclosure.

Referring to FIG. 1D, a timing advance report MAC CE according to an embodiment may have a size of 2 bytes. The timing advance report MAC CE may be configured by 2 bits of reserved fields 1d-05 and 14 bits of a timing advance (TA) field 1d-10. The timing advance field may include a T_TA value of a serving NTN cell.

FIG. 1E is a diagram illustrating a method of deriving UE position information by using a plurality of NTN cells according to an embodiment of the disclosure.

Referring to FIG. 1E, a TA value according to an embodiment may be a type of time difference value. A TA value may include a value for a plurality of base stations located at different positions. A TA value may also be used to derive position information of a corresponding UE according to a predetermined method such as triangulation. In the disclosure, proposed is a method in which a UE derives TA values for a serving NTN base station and a plurality of neighboring base stations and reports the TA values to the serving NTN base station, and the serving NTN base station derives position information of the UE by using information on the reported TA values.

According to an embodiment, a serving NTN cell 1e-05 may request a UE 1e-10 (e.g., an NTN support UE or an NTN capable UE) to report TA information for deriving UE position information, by using a predetermined radio resource control (RRC) message. For example, the TA information may include a T_TA value according to Equation 2 or some of information configuring a T_TA. For example, the TA information may be N_TA,UE-specific. The serving NTN cell may configure, for the UE 1e-10, neighboring NTN cell (e.g., neighboring NTN cell 1 1e-15 or neighboring NTN cell 2 1e-20) information required to be considered by the UE 1e-10 to derive a TA value. For example, one serving NTN cell and a maximum of two neighboring NTN cells may be configured for the UE 1e-10. For example, the neighboring NTN cells may include neighboring NTN cell 1 1e-15 and/or neighboring NTN cell 2 1e-20. A single index may be assigned and indicated to each neighboring NTN cell. For example, an index may be an indicator for identifying, indicating, or representing each neighboring NTN cell. In order to represent which NTN cell that an index indicates, when the index is configured, at least one of a CGI, a PCI, or ARFCN information corresponding to each NTN cell may be mapped to the index value. In addition, the UE 1e-10 may use information of the serving NTN cell 1e-05 and a neighboring NTN cell provided from system information (e.g., SIB19) broadcast by the serving NTN cell 1e-05. For example, the information of the serving NTN cell 1e-05 and the neighboring NTN cell may be position information of the serving NTN cell 1e-05 and the neighboring NTN cell, and information (e.g., a common TA, etc.) required for deriving T_TAs for the serving NTN cell 1e-05 and the neighboring NTN cell. The information of the serving NTN cell 1e-05 and the neighboring NTN cell may be provided to the UE le-10 through dedicated RRC signaling by the serving NTN cell 1e-05.

According to an embodiment, the UE le-10 having received a configuration for neighboring NTN cell information may derive T_TA values corresponding to the serving NTN cell 1e-05 and configured neighboring NTN cells. The derived T_TA values may be included in one or multiple TAR MAC CEs and reported (or provided) to the serving NTN cell 1e-05. In a case where T_TA values for a plurality of NTN cells are included in a single TAR MAC CE, it may be impossible for a conventional TAR MAC CE including one timing advance value to include T_TA values for a plurality of NTN cells. Therefore, a TAR MAC CE needs to be expanded to include T_TA values for a plurality of NTN cells. An example of expansion will be described later with reference to FIG. 1F.

According to an embodiment, the derived T_TA values may be included in a single TAR MAC CE and reported to the serving NTN cell 1e-05. In order to indicate which NTN cell to which a timing advance value belongs, identification (ID) or index information for indicating a particular NTN cell may be required to be additionally included in a TAR MAC CE. As described above, since there are reserved bits in a conventional TAR MAC CE, the reserved bits may be used to include information indicating an NTN cell. A modified TAR MAC CE will be described in detail with reference to FIG. 1F.

According to an embodiment, when the UE le-10 derives T_TA values corresponding to the serving NTN cell 1e-05 and the configured neighboring NTN cells through [Equation 2], a method of processing N_TAs of the neighboring NTN cells may be required. An N_TA value may be provided to the UE 1e-10 by the UE le-10 performing a random access to an NTN cell or the cell calculating based on an existing uplink reference signaling. The UE le-10 is not connected to the neighboring NTN cells, and thus the UE le-10 needs to perform a random access to a neighboring NTN cell so that the UE le-10 receives an N_TA value from the cell. In the disclosure, a method of processing an N_TA value without performing random access and a method for effectively performing random access are proposed.

According to an embodiment, in order for the UE 1e-10 to perform a random access to the neighboring NTN cells, configuration information associated with the random access may need to be first provided to or configured for the UE 1e-10. Since the configuration information needs to be first provided to or configured for the UE 1e-10, a particular time is necessarily taken for the UE le-10 to perform the random access. The purpose of reporting a timing advance value to a base station is to derive (or estimate, determine, or identify) position information of the UE 1e-10, and thus a timing advance value having very high accuracy may not be necessary. For example, a network may derive the position of the UE le-10 by using only N_TA,UE-specific values reflecting the distances (e.g., service links) between the UE le-10 and satellites.

Therefore, since N_TA information is not necessary information, the UE 1e-10 may not perform a random access to the neighboring NTN cells, and process an N-TA value according to a predetermined rule. For example, the UE le-10 may configure 0 as a N_TA value in reported timing advance information, configure a preconfigured or prefixed value (e.g., virtual value) as a N_TA value in reported timing advance information, or only consider an N_TA,UE-specific value in reported timing advance information.

According to an embodiment, if the UE le-10 performs a random access to the neighboring NTN cells, the UE 1e-1 may need a device or method for alleviating a mentioned problem (e.g., a delay occurring for reception of configuration information). In order for the UE le-10 to perform a random access to the neighboring NTN cells, configuration information related to the random access may need to be first provided to or configured for the UE. The configuration information related to the random access may be provided to or configured for a cell from broadcast system information. A predetermined time may be required to receive the configuration information related to the access from the system information. In order to reduce the consumption of the predetermined time, random access configuration information required for the serving NTN cell 1e-05 to perform a random access to the neighboring NTN cells may be provided or transmitted to the UE 1e-10. In order for the UE 1e-10 to perform a random access to the neighboring NTN cells, the UE le-10 may need to stop data transmission and/or reception with the serving NTN cell 1e-05. Therefore, the serving NTN cell 1e-05 may configure a predetermined temporal gap required for the UE 1e-10 to perform a random access to the neighboring NTN cells.

FIG. 1F is a diagram illustrating a format of a MAC CE including timing advance information on a plurality of NTN cells according to an embodiment of the disclosure.

Referring to FIG. 1F, a first TAR MAC CE 601 illustrated in FIG. 1F may be a TAR MAC CE including a plurality of timing advance values. A UE according to an embodiment may derive or obtain timing advance values of a serving NTN cell and neighboring NTN cells. The UE may include the derived timing advance values in a single enhanced TAR MAC CE and report same to the serving NTN cell. A first value 1f-05 first included among the plurality of timing advance values included in the TAR MAC CE may relate to the serving NTN cell. The values included after the first value 1f-05 may relate to the neighboring NTN cells. The values relating to the neighboring NTN cells may additionally include pieces 1f-10 and 1f-15 of NTN cell indicator information. Since there are reserved bits in a conventional TAR MAC CE, the reserved bits may be used for the TAR MAC CE to include information indicating an NTN cell.

According to an embodiment, a second TAR MAC CE 602 illustrated in FIG. 1F may be a TAR MAC CE including NTN cell indicator information. A UE may derive timing advance (TA) values of a serving NTN cell and neighboring NTN cells. The UE may include each of the derived timing advance values in a separate TAR MAC CE and report same to the serving NTN cell. Therefore, the UE may be required to report a plurality of TAR MAC CEs to the serving NTN cell. The UE uses a conventional TAR MAC CE as timing advance information on the serving NTN cell. On the other hand, the UE may use an enhanced TAR MAC CE including NTN cell indicator information 1f-20 together with timing advance information 1f-25 on the neighboring NTN cells. Since there are reserved bits in a conventional TAR MAC CE, the reserved bits may be used for the TAR MAC CE to include information indicating an NTN cell.

According to an embodiment, an NTN cell indicator may be index information, cell global identity (CGI) information, physical cell identification (PCI) information, and/or absolute radio frequency channel number (ARFCN) information, which have been provided as configuration information when the serving NTN cell requests to the UE to report TA information, so as to derive UE position information.

According to an embodiment, the UE may fail to derive a timing advance (TA) value for a designated NTN cell due to a predetermined cause. For example, due to the very long distance between a neighboring NTN cell and the UE, the UE may fail to derive a timing advance (TA) value. If the UE fails to derive a timing advance value, the UE may report a predetermined value representing deriving failure to the serving NTN cell instead of a timing advance value for a cell.

New TAR MAC CEs in (a) of FIG 1F and (b) of FIG. 1F of the disclosure may also be used to support NTN dual connectivity (DC). In (a) of FIG. 1F, timing advance group (TAG) ID information may be included in the MAC CE instead of NTN cell indicator information. A TAG may be referred to as a group of serving cells having the same TA value.

For example, the value 1f-05 first included among the plurality of timing advance values received in the TAR MAC CE in (a) of FIG. 1F may be a TA value for a primary TAG (PTAG) to which a PCell belongs. The first two fields may be used to indicate the ID of the PTAG. For example, the subsequent values included in the TAR MAC CE may be TAs for secondary TAGs (STAGs). TAG IDs 1f-10 and 1f-15 corresponding to the TA values for the STAGs may be additionally included in the TAR MAC CE.

According to an embodiment, in (b) of FIG. 1F, a single piece of TAG ID information may be included in the TAR MAC CE instead of NTN cell indicator information. The UE may derive a timing advance value from a cell belonging to one TAG and report the derived value and ID information of the TAG to the serving NTN cell.

FIG. 1G is a flowchart of a UE operation of deriving UE position information by using a plurality of NTN cells according to an embodiment of the disclosure.

Referring to FIG. 1G, in operation 1g-05, a UE may be connected to one NTN cell. For example, the UE may establish communication with one NTN cell (connecting to NTN cell).

According to an embodiment, in operation 1g-10, the UE may report or transmit capability information of the UE to the serving NTN cell. The capability information may include indicator information indicating that the UE is able to report TA information for deriving UE position information (transmitting UE capability information).

According to an embodiment, in operation 1g-15, the NTN cell may configure, for the UE, an operation of reporting TA information for deriving UE position information or the UE may receive a configuration for the TA information therefrom. For example, configuration information may include information of neighboring NTN cells for which deriving of TA information is required. For example, the neighboring NTN cells for which deriving of TA information is required may be referred to as NTN cells within a designated distance from the UE. For example, the neighboring NTN cells for which deriving of TA information is required may be referred to as NTN cells predetermined or stored in advance for deriving UE position information (receiving configuration on TA information).

According to an embodiment, in operation 1g-20, the UE may derive (or obtain, receive, identify, or determine) timing advance information from the serving NTN cell and neighboring NTN cells (deriving time advance of NTN serving cell and neighboring NTN cells).

According to an embodiment, in operation 1g-25, the UE may report or transmit, to the serving NTN cell, derived timing advance values by using an enhanced TAR MAC CE(s) (transmitting enhanced TAR MAC CE).

FIG. 1H is a flowchart of an NTN base station operation of deriving UE position information by using a plurality of NTN cells according to an embodiment of the disclosure.

Referring to FIG. 1H, in operation 1h-05 according to an embodiment, an NTN base station may trigger, for a UE, reporting of TA information for deriving or obtaining UE position information. For example, the NTN base station may start, for the UE, reporting of TA information for deriving (or obtaining, identifying, or determining) UE position information (initiating report on TA information).

According to an embodiment, in operation 1h-10, the NTN base station may provide, report, or transmit, to the UE, a configuration for an operation of deriving or obtaining UE position information. The NTN base station may provide, report, or transmit, to the UE, configuration information for an operation of deriving or obtaining UE position information (transmitting configuration).

According to an embodiment, in operation 1h-15, the NTN base station may receive an enhanced TAR MAC CE(s) from the UE. For example, the enhanced TAR MAC CE may include a plurality of TA values and indicators indicating NTN cells corresponding to the plurality of TA values. For example, the enhanced TAR MAC CE may include TA values of a plurality of TAGs and indicators indicating the plurality of TAGs. The UE may derive or obtain position information of the UE by using timing advance values included in the MAC CE (receiving enhanced TAR MA CE).

FIG. 1I is a diagram illustrating a method of deriving UE position information by using a single NTN cell according to an embodiment of the disclosure.

Referring to FIG. 1I, a TA value may be a type of time difference value. If a TA value has a value for a plurality of base stations located at different positions, the TA value may also be used to derive or obtain position information of a UE according to a predetermined method such as triangulation. However, by the characteristics of an NTN system, the size of the service area covered by a single NTN cell is very large and an NTN cell adjacent to a UE may be located too far. Therefore, it may be difficult for a UE to derive a timing advance value from a plurality of adjacent NTN satellites. Accordingly, proposed is a method in which a UE derives TA values of a serving NTN cell at different positions of a moving NTN satellite and reports the derived TA values to the serving NTN cell, and the serving NTN cell derives position information of the UE by using information.

According to an embodiment, a satellite corresponding to a serving NTN cell is movable, and thus the location of the satellite may change over time. Therefore, when the same satellite corresponding to the serving NTN cell is located at different positions under the assumption that a UE does not move fast, the UE may derive timing advance information and report the timing advance information to the serving NTN cell. The serving NTN cell having received the reported timing advance information may derive position information of the UE by using timing advance values derived at different positions.

According to an embodiment, the serving NTN cell may, in order to derive position information of the UE, request the UE, through a predetermined RRC message, to report TA information from a single satellite periodically during a particular time or a particular number of times according to a particular period. For example, the single satellite may be one of the serving NTN cell itself or a neighboring NTN cell. For example, the TA information may include a T_TA value according to [Equation 2] or some of information configuring a T_TA. For example, the TA information may be N_TA,UE-specific.

According to an embodiment, when an NTN cell 1i-05 configures, for a particular UE 1i-10, reporting of TA information for deriving UE position information, the NTN cell may provide configuration information required for collecting information for deriving position information of the UE, to the UE by using a predetermined RRC message (operation 1i-15). For example, the NTN cell 1i-05 may transmit, to the UE 1i-10, configuration information causing the UE to collect information for deriving position information of the UE a predetermined number of times (e.g., three times). For example, the UE 1i-20 having received the configuration information may collect and transmit or report, to the NTN cell 1i-05, information for deriving position information of the UE a number of times including a first time 1i-20, a second time 1i-25, and a third time 1i-30. That is, the UE 1i-20 having received the configuration information may transmit or report information for deriving position information of the UE to the NTN cell 1i-05 multiple times.

For example, the configuration information required for collecting information for deriving position information of the UE may include ID (CGI or PCI) or ARFCN information of an NTN cell considered for collecting timing advance information, information on the number of times of collecting of TA information, a time period (time interval) for collecting TA information, and/or a time duration for collecting TA information.

For example, if the NTN cell considered for collecting timing advance information is a serving NTN cell, the ID or ARFCN information of the NTN cell may be omitted. If the NTN cell considered for collecting timing advance information is a serving NTN cell, the ID or ARFCN information of the NTN cell may include a 1-bit indicator indicating the ID or ARFCN information of the NTN cell. For example, the UE may collect TA information a configured number of times (e.g., information on the number of times of collecting of TA information). For example, the UE may collect TA information at each configured time period (e.g., the time period for collecting TA information). For example, the UE may collect TA information during a configured time (e.g., the time duration for collecting TA information).

According to an embodiment, the UE having received the configuration information may collect TA information according to the configuration information. When the UE collects TA information, based on the configuration information, information (e.g., position information of the satellite, a common TA, etc.) included in SIB 19 broadcast by the serving NTN cell may be used. The UE may derive timing advance information according to a method described with reference to FIG. 1A to FIG. 1H. The UE may report TA information through a conventional TAR MAC CE every time the TA information is collected. When the UE collects TA information from an NTN cell other than the serving NTN cell, a TAR MAC CE including an NTN cell ID as in the second TAR MAC CE 602 of FIG. 1F may be used. The UE may report information through a conventional TAR MAC CE multiple times, but the UE may report periodically collected multiple TAs (or multiple TA IEs) at once through a single enhanced TAR MAC CE. The enhanced TAR MAC CE may be a type of conventional TAR MAC CEs concatenated to each other. For example, in a case where the UE collects information from an NTN cell other than the serving NTN cell, a reserved bit in an enhanced TAR MAC CE configured by conventional TAR MAC CEs continuously connected to each other may be used for the TAR MAC CE to include information indicating the NTN cell.

FIG. 1J is a flowchart of a UE operation of deriving UE position information by using a single NTN cell according to an embodiment of the disclosure.

Referring to FIG. 1J, in operation 1j-05 according to an embodiment of the disclosure, a UE may be connected to an NTN cell. For example, the UE may establish communication with the NTN cell (connecting to NTN cell).

According to an embodiment, in operation 1j-10, the UE may receive, from the NTN cell, a configuration for a TAR MAC CE for deriving UE position information or receive configuration information on the TAR MAC CE (receiving configuration).

According to an embodiment, in operation 1j-15, the UE may periodically collect TA information corresponding to the NTN cell and report or transmit a TAR MAC CE including the TA information to the NTN cell (transmitting TAR MA CE periodically during a specific time).

FIG. 1K is a flowchart of a base station operation of deriving UE position information by using a single NTN cell according to an embodiment of the disclosure.

Referring to FIG. 1K, in operation 1k-05 according to an embodiment of the disclosure, a base station may trigger an operation of obtaining position information for a particular UE (initiating obtaining UE location information).

According to an embodiment, in operation 1k-10, the base station may configure, for the UE, transmission of an enhanced TAR MAC CE for deriving UE position information. For example, the base station may transmit, to the UE, a configuration for a TAR MAC CE for deriving UE position information or transmit configuration information (transmitting configuration).

According to an embodiment, in operation 1k-15, the base station may receive multiple enhanced TAR MAC CEs from the UE during a designated period, and derive or obtain position information of the UE by using the received a plurality of TAR MAC CEs (receiving a plurality of TAR MAC CEs during a specific time).

According to an embodiment, a method performed by a UE in a non-terrestrial network (NTN) may include receiving information on a plurality of NTN cells from a satellite, identifying a plurality of timing advance (TA) values of the plurality of NTN cells, based on the information on the plurality of NTN cells, and transmitting, to the satellite, a timing advance report MAC control element (TAR MAC CE) including the plurality of TA values of the plurality of NTN cells.

According to an embodiment, the information on the plurality of NTN cells may include position information on each of the plurality of NTN cells, and the information on the plurality of NTN cells may be configured through radio resource control (RRC) signaling.

According to an embodiment, the plurality of TA values may include a first TA value and a second TA value, and the MAC CE may include information on a first identification (ID) indicating a first NTN group corresponding to the first TA value among the plurality of NTN cells, and information on a second ID indicating a second NTN group corresponding to the second TA value among the plurality of NTN cells.

According to an embodiment, the first NTN group may include a primary cell, and the second NTN group may include a secondary cell.

According to an embodiment, a UE in a non-terrestrial network (NTN) may include a transceiver, and a controller coupled with the transceiver. The controller may be configured to receive information on a plurality of NTN cells from a satellite, identify a plurality of timing advance (TA) values of the plurality of NTN cells, based on the information on the plurality of NTN cells, and transmit, to the satellite, a timing advance report control element (TAR MAC CE) including the plurality of TA values of the plurality of NTN cells.

According to an embodiment, the information on the plurality of NTN cells may include position information on each of the plurality of NTN cells, and the information on the plurality of NTN cells may be configured through radio resource control (RRC) signaling.

According to an embodiment, the plurality of TA values may include a first TA value and a second TA value, and the MAC CE may include information on a first identification (ID) indicating a first NTN group corresponding to the first TA value among the plurality of NTN cells, and information on a second ID indicating a second NTN group corresponding to the second TA value among the plurality of NTN cells.

According to an embodiment, the first NTN group may include a primary cell, and the second NTN group may include a secondary cell.

According to an embodiment, a method performed by a satellite in a non-terrestrial network (NTN) may include transmitting information on a plurality of NTN cells to a UE, and receiving, from the UE, a timing advance report control element (TAR MAC CE) including a plurality of timing advance (TA) values of the plurality of NTN cells. The plurality of TA values of the plurality of NTN cells may be based on the information on the plurality of NTN cells.

According to an embodiment, the information on the plurality of NTN cells may include position information on each of the plurality of NTN cells. The information on the plurality of NTN cells may be configured through radio resource control (RRC) signaling.

According to an embodiment, the plurality of TA values may include a first TA value and a second TA value, and the MAC CE may include information on a first identification (ID) indicating a first NTN group corresponding to the first TA value among the plurality of NTN cells, and information on a second ID indicating a second NTN group corresponding to the second TA value among the plurality of NTN cells.

According to an embodiment, the first NTN group may include a primary cell, and the second NTN group may include a secondary cell.

According to an embodiment, a satellite in a non-terrestrial network (NTN) may include a transceiver, and a controller coupled with the transceiver. The controller may be configured to transmit information on a plurality of NTN cells to a UE, and receive, from the UE, a timing advance report control element (TAR MAC CE) including a plurality of timing advance (TA) values of the plurality of NTN cells. The plurality of TA values of the plurality of NTN cells may be based on the information on the plurality of NTN cells.

According to an embodiment, the information on the plurality of NTN cells may include position information on each of the plurality of NTN cells. The information on the plurality of NTN cells may be configured through radio resource control (RRC) signaling.

According to an embodiment, the plurality of TA values may include a first TA value and a second TA value, and the MAC CE may include information on a first identification (ID) indicating a first NTN group corresponding to the first TA value among the plurality of NTN cells, and information on a second ID indicating a second NTN group corresponding to the second TA value among the plurality of NTN cells.

FIG. 1L shows a structure of a UE according to an embodiment of the disclosure.

Referring to FIG. 1L, a UE according to an embodiment may include a radio frequency (RF) processor 1I-10, a baseband processor 1I-20, a storage unit 1I-30, and/or a controller 1I-40.

According to an embodiment, the RF processor 1I-10 may perform a function, such as signal band conversion, amplification, etc., for transmitting or receiving a signal through a wireless channel. That is, the RF processor 1I-10 may upconvert a baseband signal provided from the baseband processor 1I-20, into an RF band signal, and then transmit the RF band signal through an antenna, and may downconvert an RF band signal received through an antenna, into a baseband signal. For example, the RF processor 1I-10 may include a transmission filter, a reception filter, an amplifier, a mixer, an oscillator, a digital-to-analog converter (DAC), and/or an analog-to-digital converter (ADC). The above components of the RF processor 1I-10 merely correspond to an example, and the RF processor 1I-10 may further include other components or omit some of the above components. In the diagram of FIG. 1L, only one antenna is illustrated, but the UE may include a plurality of antennas. Furthermore, the RF processor 1I-10 may include a plurality of RF chains. Moreover, the RF processor 1I-10 may perform beamforming. To perform beamforming, the RF processor 1I-10 may adjust the phase and size of each of the signals transmitted or received through a plurality of antennas or antenna elements. In addition, the RF processor 1I-10 may perform MIMO, and may receive several layers when a MIMO operation is performed.

According to an embodiment, the baseband processor 1I-20 may perform a function of conversion between a baseband signal and a bitstream according to a physical layer specification of a system. For example, at the time of data transmission, the baseband processor 1I-20 may generate complex symbols by encoding and modulating a transmission bitstream. In addition, at the time of data reception, the baseband processor 1I-20 may reconstruct a reception bitstream by demodulating and decoding a baseband signal provided from the RF processor 1I-10. For example, in a case where an orthogonal frequency division multiplexing (OFDM) scheme is applied, at the time of data transmission, the baseband processor 1I-20 may generate complex symbols by encoding and modulating a transmission bitstream, map the complex symbols to subcarriers, and then configure OFDM symbols through inverse fast Fourier transform (IFFT) calculation and cyclic prefix (CP) insertion. In addition, at the time of data reception, the baseband processor 1I-20 may divide a baseband signal provided from the RF processor 1I-10, by the units of OFDM symbols, reconstruct signals mapped to subcarriers, through fast Fourier transform (FFT) calculation, and then reconstruct a reception bitstream through demodulation and decoding.

According to an embodiment, the baseband processor 1I-20 and the RF processor 1I-10 may transmit and/or receive a signal as described above. Accordingly, the baseband processor 1I-20 and the RF processor 1I-10 may be called a transmitter, a receiver, a transceiver, or a communication unit. Furthermore, at least one of the baseband processor 1I-20 and the RF processor 1I-10 may include a plurality of communication modules to support a plurality of different wireless access technologies. In addition, at least one of the baseband processor 1I-20 and the RF processor 1I-10 may include different communication modules to process signals of different frequency bands. For example, the different wireless access technologies may include wireless LAN (e.g., IEEE 802.11), cellular network (e.g., LTE), etc. Furthermore, the different frequency bands may include a super high frequency (SHF) (e.g., 2.NRHz, NRhz) band, a millimeter (mm) wave (e.g., 60 GHz) band, etc. The UE may transmit and/or receive a signal to/from a base station by using the baseband processor 1I-20 and the RF processor 1I-10, and the signal may include control information and data.

According to an embodiment, the storage unit 1I-30 may store data such as a basic program, an application program, and configuration information for an operation of the UE. Particularly, the storage unit 1I-30 may store information related to a second access node that performs wireless communication by using a second wireless access technology. The storage unit 1I-30 may provide stored data in response to a request of the controller 1I-40. The storage unit 1I-30 may be configured by a storage medium such as a ROM, a RAM, a hard disk, a CD-ROM, and a DVD, or a combination of storage mediums. In addition, the storage unit 1o-30 may be configured by a plurality of memories.

According to an embodiment, the controller 1l-40 may control overall operations of the UE. For example, the controller 1l-40 may transmit and/or receive a signal via the baseband processor 1l-20 and the RF processor 1l-10. In addition, the controller 1l-40 records and reads data in and from the storage unit 1l-40. To this end, the controller 1l-40 may include at least one processor. For example, the controller 1l-40 may include a communication processor (CP) performing control for communication, and an application processor (AP) controlling a higher layer, such as an application program. In addition, at least one component in the UE may be implemented as a single chip.

FIG. 1M illustrates a block configuration of a main base station in a wireless communication system according to an embodiment of the disclosure.

Referring to FIG. 1M, a base station according to an embodiment may include an RF processor 1m-10, a baseband processor 1m-20, a backhaul communication unit 1m-30, a storage unit 1m-40, and/or a controller 1m-50. The components included in the base station is not limited to the above components, and the base station may omit some of the components illustrated in FIG. 1M or further include additional components.

According to an embodiment, the RF processor 1m-10 may perform a function, such as signal band conversion, amplification, etc., for transmitting or receiving a signal through a wireless channel. That is, the RF processor 1m-10 may upconvert a baseband signal provided from the baseband processor 1m-20, into an RF band signal, and then transmit the RF band signal through an antenna, and downconvert an RF band signal received through the antenna, into a baseband signal. For example, the RF processor 1m-10 may include a transmission filter, a reception filter, an amplifier, a mixer, an oscillator, a DAC, and/or an ADC. In FIG. 1M, only one antenna is illustrated, but a first access node or the base station may include multiple antennas. In addition, the RF processor 1m-10 may include a plurality of RF chains. Furthermore, the RF processor 1m-10 may perform beamforming. To perform beamforming, the RF processor 1m-10 may adjust the phase and size of each of the signals transmitted or received via multiple antennas or antenna elements. The RF processor may perform a downlink MIMO operation by transmitting one or more layers.

According to an embodiment, the baseband processor 1m-20 may perform a function of conversion between a baseband signal and a bitstream according to a physical layer specification of a first wireless access technology. For example, at the time of data transmission, the baseband processor 1m-20 may generate complex symbols by encoding and modulating a transmission bitstream. In addition, at the time of data reception, the baseband processor 1m-20 may reconstruct a reception bitstream by demodulating and decoding a baseband signal provided from the RF processor 1m-10. For example, in a case where an OFDM scheme is applied, at the time of data transmission, the baseband processor 1m-20 may generate complex symbols by encoding and modulating a transmission bitstream, map the complex symbols to subcarriers, and then configure OFDM symbols through IFFT calculation and CP insertion. In addition, at the time of data reception, the baseband processor 1m-20 may divide a baseband signal provided from the RF processor 1m-10 by the units of OFDM symbols, reconstruct signals mapped to subcarriers through FFT calculation and then reconstruct a reception bitstream through demodulation and decoding. The baseband processor 1m-20 and the RF processor 1m-10 may transmit and/or receive a signal as described above. Accordingly, the baseband processor 1m-20 and the RF processor 1m-10 may be called a transmitter, a receiver, a transceiver, a communication unit, or a wireless communication unit. The base station may transmit and/or receive a signal to/from a UE by using the baseband processor 1p-20 and the RF processor 1p-10, and the signal may include control information and data.

According to an embodiment, the backhaul communication unit 1m-30 may provide an interface for performing communication with other nodes within a network. That is, the backhaul communication unit 1m-30 may convert, into a physical signal, a bitstream transmitted from the main base station to another node, for example, an auxiliary base station, a core network, etc., and may convert a physical signal received from another node, into a bitstream. The backhaul communication unit 1m-30 may be included in a communication unit.

According to an embodiment, the storage unit 1m-40 may store data such as a basic program, an application program, and configuration information for an operation of the base station. Particularly, the storage unit 1m-40 may store information relating to a bearer assigned to a connected UE, a measurement result reported from a connected UE, etc. In addition, the storage unit 1m-40 may store information serving as a determination criterion of whether to provide or stop providing multi-connection to a UE. The storage unit 1m-40 may provide stored data in response to a request of the controller 1m-50. The storage unit 1m-40 may be configured by a storage medium such as a ROM, a RAM, a hard disk, a CD-ROM, and a DVD, or a combination of storage mediums. In addition, the storage unit 1m-40 may be configured by a plurality of memories.

According to an embodiment, the controller 1m-50 may control overall operations of the base station. For example, the controller 1m-50 may transmit and/or receive a signal via the baseband processor 1m-20 and the RF processor 1m-10, or via the backhaul communication unit 1m-30. In addition, the controller 1m-50 records and reads data in and from the storage unit 1m-40. To this end, the controller 1m-50 may include at least one processor. In addition, at least one component in the base station may be implemented as a single chip.

According to an embodiment, a method of determining the position of a UE may include establishing communication with a first non-terrestrial network (NTN) base station, receiving, from the first NTN base station, first timing advance (TA) information on the UE and the first NTN base station and receiving second TA information from a second NTN base station adjacent to the first NTN base station, and transmitting information on a timing advance report (TAR) to the first NTN base station, based on the first TA information and the second TA information.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims as described below and equivalents thereof. That is, it will be apparent to those skilled in the art that other variants based on the technical idea of the disclosure may be implemented. Also, the above respective embodiments may be employed in combination, as necessary. For example, the methods proposed in the disclosure may be partially combined with each other to operate a network entity and a terminal. Moreover, although the above embodiments have been described based on the 5G or NR system, other variants based on the technical idea of the embodiments may also be implemented in other communication systems such as LTE, LTE-A, or LTE-A-Pro systems.

**Claims**

1. A method performed by a terminal in a non-terrestrial network (NTN), the method comprising:

   receiving, from a satellite, information on a plurality of NTN cells;
   identifying a plurality of timing advance (TA) values of the plurality of NTN cells, based on the information on the plurality of NTN cells; and
   transmitting, to the satellite, a timing advance report (TAR) medium access control (MAC) control element (CE) including the plurality of TA values of the plurality of NTN cells.

2. The method of claim 1, wherein the information on the plurality of NTN cells comprises position information on each of the plurality of NTN cells, and
   wherein the information on the plurality of NTN cells is configured through radio resource control (RRC) signaling.

3. The method of claim 1, wherein the plurality of TA values comprise a first TA value and a second TA value, and
   wherein the MAC CE comprises information on a first identification (ID) indicating a first NTN group corresponding to the first TA value among the plurality of NTN cells, and information on a second ID indicating a second NTN group corresponding to the second TA value among the plurality of NTN cells.

4. The method of claim 3, wherein the first NTN group comprises a primary cell, and
   wherein the second NTN group comprises a secondary cell.

5. A terminal in a non-terrestrial network (NTN), the terminal comprising:

   a transceiver; and

a controller coupled with the transceiver,
wherein the controller is configured to:

receive, from a satellite, information on a plurality of NTN cells;
identify a plurality of timing advance (TA) values of the plurality of NTN cells, based on the information on the plurality of NTN cells; and
transmit, to the satellite, a timing advance report (TAR) medium access control (MAC) control element (CE) including the plurality of TA values of the plurality of NTN cells.

6. The terminal of claim 5, wherein the information on the plurality of NTN cells comprises position information on each of the plurality of NTN cells, and
wherein the information on the plurality of NTN cells is configured through radio resource control (RRC) signaling.

7. The terminal of claim 5, wherein the plurality of TA values comprise a first TA value and a second TA value, and
wherein the MAC CE comprises information on a first identification (ID) indicating a first NTN group corresponding to the first TA value among the plurality of NTN cells, and information on a second ID indicating a second NTN group corresponding to the second TA value among the plurality of NTN cells.

8. The terminal of claim 7, wherein the first NTN group comprises a primary cell, and
wherein the second NTN group comprises a secondary cell.

9. A method performed by a satellite in a non-terrestrial network (NTN), the method comprising:

transmitting, to a terminal, information on a plurality of NTN cells; and
receiving, from the terminal, a timing advance report (TAR) medium access control (MAC) control element (CE) including a plurality of timing advance (TA) values of the plurality of NTN cells,
wherein the plurality of TA values of the plurality of NTN cells are based on the information on the plurality of NTN cells.

10. The method of claim 9, wherein the information on the plurality of NTN cells comprises position information on each of the plurality of NTN cells, and
wherein the information on the plurality of NTN cells is configured through radio resource control (RRC) signaling.

11. The method of claim 9, wherein the plurality of TA values comprise a first TA value and a second TA value, and
wherein the MAC CE comprises information on a first identification (ID) indicating a first NTN group corresponding to the first TA value among the plurality of NTN cells, and information on a second ID indicating a second NTN group corresponding to the second TA value among the plurality of NTN cells.

12. The method of claim 11, wherein the first NTN group comprises a primary cell, and
wherein the second NTN group comprises a secondary cell.

13. A satellite in a non-terrestrial network (NTN), the satellite comprising:

a transceiver; and
a controller coupled with the transceiver,
wherein the controller is configured to:

transmit, to a terminal, information on a plurality of NTN cells; and
receive, from the terminal, a timing advance report (TAR) medium access control (MAC) control element (CE) including a plurality of timing advance (TA) values of the plurality of NTN cells, and
wherein the plurality of TA values of the plurality of NTN cells are based on the information on the plurality of NTN cells.

14. The satellite of claim 13, wherein the information on the plurality of NTN cells comprises position information on each of the plurality of NTN cells, and
wherein the information on the plurality of NTN cells is configured through radio resource control (RRC) signaling.

15. The satellite of claim 13, wherein the plurality of TA values comprise a first TA value and a second TA value, and

wherein the MAC CE comprises information on a first identification (ID) indicating a first NTN group corresponding to the first TA value among the plurality of NTN cells, and information on a second ID indicating a second NTN group corresponding to the second TA value among the plurality of NTN cells.

## FIG.1A

1b-05

1b-10

UE

eNB

1b-15 Random access preamble

1b-20 Random access response

1b-25 Scheduled transmission (msg3)

1b-30 Contention resolution (msg4)

FIG.1B

FIG.1C

| 1d-05 | R | R | TA | | Oct 1 |
| 1d-10 | | TA | | | Oct 2 |

# FIG.1D

1e-15
Neighboring NTN cell 1

1e-05
Serving NTN cell

1e-20
Neighboring NTN cell 2

TA calculation
for neighboring
cell 1

TA calculation
for serving cell

Enhanced
TAR MAC CE

TA calculation
for neighboring
cell 2

1e-10

NTN-supporting UE

# FIG.1E

601

| | | | | | |
|---|---|---|---|---|---|

| R | R | TA | Oct 1 |
|---|---|---|---|
| | | TA | Oct 2 |
| NTN cell index | | TA | Oct 3 |
| | | TA | Oct 4 |
| NTN cell index | | TA | Oct 5 |
| | | TA | Oct 6 |

1f-05 { (Oct 1, Oct 2)
1f-10 (NTN cell index, Oct 3)
1f-15 (Oct 4)

602

| NTN cell index | TA | Oct 1 |
|---|---|---|
| | TA | Oct 2 |

1f-20 (NTN cell index, Oct 1)
1f-25 (Oct 2)

# FIG.1F

START

1g-05 — CONNECT TO NTN CELL

1g-10 — TRANSMIT UE CAPABILITY INFORMATION

1g-15 — RECEIVE CONFIGURATION FOR TA INFORMATION

1g-20 — DERIVE TA OF NTN SERVING CELL AND NEIGHBORING NTN CELLS

1g-25 — TRANSMIT ENHANCED TAR MAC CE

END

# FIG.1G

START

1h-05 — INITIATE REPORTING OF TA INFORMATION

1h-10 — TRANSMIT CONFIGURATION

1h-15 — RECEIVE ENHANCED TAR MAC CE

END

FIG.1H

Moving a NTN cell →

1i-05

Configure reporting of
TAR MAC CE N times

1i-15

1i-20

First transmission
of TAR MAC CE

1i-25

Second transmission
of TAR MAC CE

1i-30

Third transmission of
TAR MAC CE

1i-10

NTN-supporting UE

FIG.1I

EP 4 543 108 A1

START

1j-05 — CONNECT TO NTN CELL

1j-10 — RECEIVE CONFIGURATION

1j-15 — PERIODICALLY TRANSMIT TAR MAC CE DURING DESIGNATED TIME

END

FIG.1J

START

1k-05 — INITIATE ACQUISITION OF UE POSITION INFORMATION

1k-10 — TRANSMIT CONFIGURATION

1k-15 — RECEIVE PLURALITY OF TAR MAC CES DURING DESIGNATED TIME

END

# FIG.1K

FIG.1L

FIG.1M

| INTERNATIONAL SEARCH REPORT | International application No. |
| :-- | :-- |
| | **PCT/KR2023/009817** |

### A. CLASSIFICATION OF SUBJECT MATTER

**H04W 64/00**(2009.01)i; **H04W 72/23**(2023.01)i; **H04W 56/00**(2009.01)i; **H04W 84/06**(2009.01)i

According to International Patent Classification (IPC) or to both national classification and IPC

### B. FIELDS SEARCHED

Minimum documentation searched (classification system followed by classification symbols)

H04W 64/00(2009.01); H04B 7/06(2006.01); H04B 7/185(2006.01); H04L 12/26(2006.01); H04W 4/029(2018.01); H04W 56/00(2009.01); H04W 74/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NTN (non-terrestrial network), TA (timing advance), 위성 (satellite), 셀 (cell), RRC (radio resource control)

### C. DOCUMENTS CONSIDERED TO BE RELEVANT

| Category* | Citation of document, with indication, where appropriate, of the relevant passages | Relevant to claim No. |
| :-- | :-- | :-- |
| Y | US 2021-0075501 A1 (QUALCOMM INCORPORATED) 11 March 2021 (2021-03-11) See paragraphs [0006]-[0178]. | 1-15 |
| Y | US 2022-0070811 A1 (SAMSUNG ELECTRONICS CO., LTD.) 03 March 2022 (2022-03-03) See paragraphs [0084]-[0201]. | 1-15 |
| A | WO 2022-086205 A1 (LG ELECTRONICS INC.) 28 April 2022 (2022-04-28) See claims 1-10. | 1-15 |
| A | US 2021-0314889 A1 (QUALCOMM INCORPORATED) 07 October 2021 (2021-10-07) See claims 1-15. | 1-15 |
| A | US 2022-0174635 A1 (SAMSUNG ELECTRONICS CO., LTD.) 02 June 2022 (2022-06-02) See paragraphs [0057]-[0104]. | 1-15 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| :-- | :-- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| :-- | :-- |
| **13 October 2023** | **13 October 2023** |

| Name and mailing address of the ISA/KR | Authorized officer |
| :-- | :-- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/009817**

| Patent document cited in search report | | | Publication date (day/month/year) | Patent family member(s) | | | Publication date (day/month/year) |
|---|---|---|---|---|---|---|---|
| US | 2021-0075501 | A1 | 11 March 2021 | CN | 114586292 | A | 03 June 2022 |
| | | | | EP | 4026261 | A1 | 13 July 2022 |
| | | | | US | 11356171 | B2 | 07 June 2022 |
| | | | | WO | 2021-045855 | A1 | 11 March 2021 |
| US | 2022-0070811 | A1 | 03 March 2022 | CN | 116018848 | A | 25 April 2023 |
| | | | | EP | 4205463 | A1 | 05 July 2023 |
| | | | | JP | 2023-540946 | A | 27 September 2023 |
| | | | | US | 2023-0117959 | A1 | 20 April 2023 |
| | | | | WO | 2022-045867 | A1 | 03 March 2022 |
| WO | 2022-086205 | A1 | 28 April 2022 | EP | 4236494 | A1 | 30 August 2023 |
| | | | | KR | 10-2023-0092895 | A | 26 June 2023 |
| US | 2021-0314889 | A1 | 07 October 2021 | CN | 115362640 | A | 18 November 2022 |
| | | | | EP | 4128579 | A2 | 08 February 2023 |
| | | | | WO | 2021-202404 | A2 | 07 October 2021 |
| | | | | WO | 2021-202404 | A3 | 04 November 2021 |
| US | 2022-0174635 | A1 | 02 June 2022 | EP | 3925329 | A1 | 22 December 2021 |
| | | | | GB | 201904465 | D0 | 15 May 2019 |
| | | | | GB | 2582662 | A | 30 September 2020 |
| | | | | GB | 2582662 | B | 06 October 2021 |
| | | | | KR | 10-2021-0122893 | A | 12 October 2021 |
| | | | | WO | 2020-204421 | A1 | 08 October 2020 |

Form PCT/ISA/210 (patent family annex) (July 2022)